# EUROPÄISCHE PATENTSCHRIFT

(11) **EP 3 980 240 B1**
(45) Veröffentlichungstag und Bekanntmachung des Hinweises auf die Patenterteilung: **13.09.2023**
(21) Anmeldenummer: 20723071.5
(22) Anmeldetag: 28.04.2020
(51) Int. Cl.: B29C 48/285, B29C 48/36, B29C 48/92, B29B 7/60, B29B 7/72, B29C 45/18, B65G 65/46

(54) **VERFAHREN ZUM ÜBERWACHEN EINES FÜLLSTANDES EINER ZUFÜHRVORRICHTUNG SOWIE VORRICHTUNG ZUM DURCHFÜHREN DES VERFAHRENS UND SPRITZGIESSMASCHINE/EXTRUDEREINHEIT AUFWEISEND EINE SOLCHE VORRICHTUNG**
METHOD OF MONITORING A FILLING LEVEL OF A FEEDING DEVICE AND DEVICE FOR CARRYING OUT THE METHOD AND INJECTION MECHANISM/EXTRUSIVE UNIT COMPRISING SUCH A DEVICE
PROCÉDÉ DE SURVEILLANCE DU NIVEAU DE REMPLISSAGE D'UN DISPOSITIF D'AMENÉE ET DISPOSITIF POUR METTRE EN OEUVRE CE PROCÉDÉ ET MACHINE DE MOULAGE PAR INJECTION/UNITÉ D'EXTRUSION PRÉSENTANT UN TEL DISPOSITIF

(30) Priorität: 05.06.2019 DE 102019115122
(43) Veröffentlichungstag der Anmeldung: 13.04.2022
(73) Patentinhaber: KraussMaffei Technologies GmbH, 80997 München (DE)
(72) Erfinder: TOPIC, Nicolina, 80538 München (DE); MOSER, Stefan, 85399 Hallbergmoos (DE); WIELAND, Cordula, 86938 Schondorf (DE)
(74) Vertreter: Wilhelm, Ludwig
(86) Internationale Anmeldenummer: PCT/EP2020/061743
(87) Internationale Veröffentlichungsnummer: WO 2020/244848

(56) Entgegenhaltungen:
- EP-A2- 0 470 510
- EP-A2- 1 317 009
- EP-A2- 3 332 940
- DE-A1-102007 012 199
- DE-A1-102013 106 135

## Beschreibung

Die Erfindung betrifft ein Verfahren zum Überwachen eines Füllzustandes einer Zuführvorrichtung nach dem Oberbegriff des Anspruchs 1. Weiterhin betrifft die Erfindung eine Vorrichtung zum Durchführen des Verfahrens nach dem Oberbegriff des Anspruches 12 sowie eine Spritzgießmaschine/Extrudereinheit.

Es sind Vorrichtungen zum Beschicken von Spritzgieß- und Extrudereinheiten mit nicht selbsttätig einzugsfähigen Materialien, insbesondere von nicht freifließenden oder zähfließenden Materialien wie z. B. gasfaserbeladenem Polyestermaterial bekannt. Eine solche Zuführvorrichtung umfasst typischer Weise ein mit einem eigenen Antrieb versehenen Einfülltrichter als Rotationskörper. Der Rotationskörper hat eine Drehachse A, die eine Senkrechte oder aus der Senkrechten geneigte Anordnung besitzt. Der Einfülltrichter/Vorratsbehälter ist dementsprechend drehbar gelagert. Solche Zuführvorrichtungen sind aus der EP 0 286 972 B1, der EP 0 470 510 B1 und der EP 0 687 543 B1 bekannt. Diese umfassen zusätzlich eine um eine eigene Achse drehende Förderschnecke (Rotationsachse B), wobei die Förderschnecke einen eigenen Antrieb besitzt. Eine solche Förderschnecke kann beispielsweise auch die Form eines Kegelschneckenmischers besitzen und durch den Einfülltrichter an der tiefsten Stelle naher der Mantellinienfläche parallel zu dieser hindurchgeführt sein. Als nächstliegender Stand der Technik kann das Dokument EP 0 470 510 A2 angesehen werden, welches den Oberbegriff von Anspruch 1 offenbart.

Die Vorrichtungen aus dem Stand der Technik werden zumeist mit Rohmaterial, welches in ballenartiger Form vorliegt, diskontinuierlich beladen. Sinkt der Materialfüllstand aufgrund von Materialentnahme, sinkt auch der Fördervolumenstrom der Zuführeinheit (Förderschnecke) und die Dosierzeit der Plastifiziereinheit steigt. Dementsprechend steigt die Dauer der Scherbelastung des zu fördernden Materials. Bei Zuhilfenahme einer Stopfdruckregelung wird zudem aufgrund des sinkenden Stopfdruckes die Förderschneckendrehzahl erhöht. Auch die erhöhte Förderschneckendrehzahl trägt zu einem erhöhten Schereintrag bei. Das Material wird durch die Scheren erwärmt und gegebenenfalls geschädigt. Es können z. B. ein Faserbruch der zugesetzten Fasern oder ein Beginn der Vernetzung stattfinden.

Des Weiteren weisen insbesondere Materialtypen auf Polyesterharzbasis einen Anteil flüchtiger Monomere auf. Dies ist zumeist Styrol, welches als Lösungsmittel und Reaktionspartner dient. Entsprechend ist auch die Verweilzeit des Rohmaterials in der Zuführvorrichtung für die Qualität des zu verarbeitenden Materials entscheidend. Eine lange Verweilzeit des Rohmaterials in der Zuführvorrichtung bzw. dem Vorratsbehälter erfordert zudem zur Erfüllung von MAK-Werten am Arbeitsplatz oftmals Absaugvorrichtungen, die über der Zuführeinheit/Zuführvorrichtung platziert werden müssen.

Im Stand der Technik werden zur kontinuierlichen Messung des Füllstandes freistrahlende Technologien, wie z. B. optische Sensoren, Radar oder Ultraschall, herangezogen. Diesbezügliche Sensoren befinden sich im Deckel des Einfülltrichters/Vorratsbehälters. Dieser gibt ein Signal zum manuellen oder automatischen Wiederbefüllen ab. Alternativ wird nach einer festgelegten Zyklenzahl wieder befüllt.

Aus der DE 10 2007 012 199 A1 ist ein Verfahren zum Betreiben einer Plastifizierungseinrichtung, z. B. eines Extruders oder einer Spritzgießmaschine bekannt, zu denen von einem mit Rohmaterial befüllten Einfülltrichter Rohmaterial mit einer oder mehreren in einem Plastifizierungszylinder drehbar antreibbar Plastifizierungsschnecken zugeleitet wird. Direkte und/oder indirekte Betriebsparameter der Plastifizierungseinrichtung beeinflussen den Füllstand des Rohmaterials im Einfülltrichter der Zuführvorrichtung und werden auf einen Wert innerhalb eines zu einem optimalen Betriebsparameterbereich korrespondierenden Füllstandbereich eingestellt und/oder gehalten. Als direkte Betriebsparameter wird im Rahmen dieser Anmeldung die Drehzahl der Plastifizierungsschnecke, der Staudruck, die Wegposition der Plastifizierungsschnecke, der Rückzug der Plastifizierungsschnecke, Temperaturprofile der Plastifizierungsschnecke und/oder des Plastifizierungszylinders angesehen. Als indirekte Betriebsparameter werden z. B. das Antriebsdrehmoment der Plastifizierungsschnecke, eine Rücklaufgeschwindigkeit der Plastifizierungsschnecke, eine Dosierzeit, Messwerte der hergestellten Produkte, wie z. B. Bauteilgewicht, Kavitäteninnendruck oder Kavitätentemperatur, herangezogen. Der optimale Füllstandsbereich bei solchen Zuführvorrichtungen aus dem Stand der Technik oder aus dem Bereich minimalen Antriebsdrehmoment der Schnecke (Plastifizierschnecke) oberhalb des Bereichs der Unterfütterung und in Abhängigkeit des zu verarbeitenden Materials ermittelt und bestimmt. Das Rohmaterial wird dem Einfülltrichter mittels einer Fördereinrichtung kontinuierlich oder diskontinuierlich zugeführt. Die Fördermenge wird aus einem Quotienten aus Schussgewicht und Dosierzeit bestimmt. Der Füllstand wird während des Betriebs der Plastifizierungseinrichtung konstant oder näherungsweise konstant gehalten.

Aus der DE 10 2009 045 768 A1, der DE 10 2012 111 827 A1, der EP 1 357 366 A2, der EP 2 793 004 A1 ist ein Grenzstanderfassungsgerät in Form eines sogenannten Drehflügelmelders bekannt. Ein solcher Drehflügelmelder ist dazu ausgebildet, den Füllstand eines mit einem Schüttgut gefüllten Silos zu erfassen. Dazu weist der Drehflügelmelder einen Antriebsmotor zur Erzeugung eines Drehflügeldrehmomentes auf, sowie eine Signalverarbeitungseinheit zur Verarbeitung eines Füllstandsignales.

Für den Fall, dass das zu überwachende Schüttgut, z. B. Schüttgut in Form von Kunststoffpulver (rieselfähig), bzw. Kunststoffgranulaten, Getreide, Sojabohnen, Holzspäne oder auch Steinkohle, den Drehflügel erreicht, behindert das Schüttgut die Drehbewegung des Drehflügels, was die Signalverarbeitungseinheit aufgrund eines erhöhten Antriebsstroms des Antriebsmotors erkennt und einer übergeordneten Verarbeitungseinheit zur Anzeige eines entsprechenden Füllstandes zuleitet.

Derartige Füllstandsmessungen über die Messung eines Drehflügelantriebsdrehmomentes sind insbesondere für schütt- oder rieselfähige, im Allgemeinen auch fließfähige Güter geeignet. Knetfähige, teigartige Massen sind hiermit hinsichtlich ihres Füllstandes nur ungenau bestimmbar, da diese sich nicht gleichmäßig im Behälter verteilen, sondern Ballentropfen bilden können, die gegebenenfalls außerhalb des Drehbereiches des Drehflügels angeordnet sind und nicht zu einer Drehmomenterhöhung oder allgemein gesagt, einer Beeinflussung, beitragen. Eine solche ungleichmäßige Verteilung von ballenartigen, knetfähigen, teigartigen Rohmaterialien trägt auch dazu bei, dass die unterschiedliche Anordnung dieser teigartigen Ballen im Vorratsbehälter die Füllstandsanzeige mittels freistrahlender Technologien beeinflusst. So kann es z. B. durchaus sein, dass ein Füllstandmessgerät, welches beispielsweise mittels Laser oder Lichtschranke funktioniert, einen niedrigen Füllstand anzeigt und in der unmittelbaren Nachbarschaft aber gerade ein Turm aus ballenartigem Material vorliegt. Hierdurch entstehen sogenannte Fehlmessungen. Die Bewegung der Masse im Vorratsbehälter verursacht somit schwankende Signale, die nicht den tatsächlichen Füllstand wiederspiegeln und den Betreiber in seiner Nachfüllroutine irritieren. Die zusätzlich verbaute Sensorik verursacht Kosten und ist aufgrund der frei zugänglichen Positionierung verschleißanfällig.

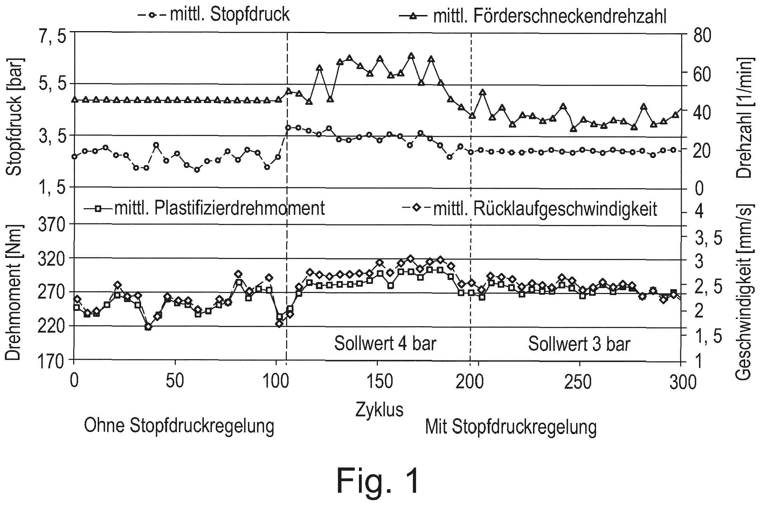

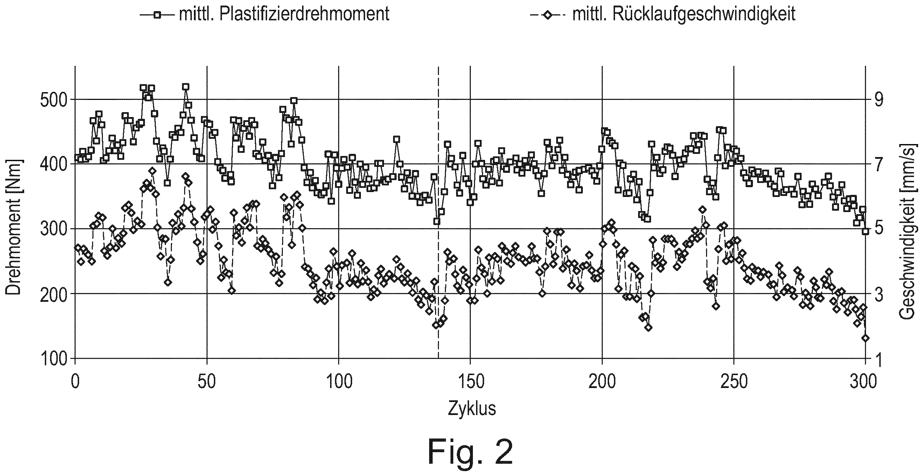

Bei Messungen von direkten oder indirekten Betriebsparametern der Plastifizierschnecke und hieraus vorgenommenen Rückschlüssen auf den Füllstand ist ebenfalls mit Nachteilen verbunden. Diese Betriebsparameter spiegeln bei einem System mit aktiver Zuführeinheit vornehmlich den Fördervolumenstrom der Zuführeinheit wider, der maßgeblich durch die stopfdruckgeregelte Förderschneckendrehzahl beeinflusst wird. Dies sei anhand der Figuren 1 und 2 kurz verdeutlicht. In Figur 1 wird anhand von Messdaten ohne und mit Stopfdruckregelung bei verschiedenen Stopfdrucksollwerten gearbeitet. Figur 1 verdeutlicht in der oberen Grafikhälfte einen Verlauf des mittleren Stopfdruckes (Messpunktsymbole rund, kreisförmig) und den Verlauf der mittleren Förderschneckendrehzahl (Messpunktsymbol dreieckig). Für etwas mehr als 100 Zyklen wurde dieser Verlauf ohne Stopfdruckregelung bei konstanter Förderschneckendrehzahl aufgenommen. Für circa 80 weitere Zyklen wurde ein Stopfdrucksollwert von 4 bar eingestellt und für weitere 100 Zyklen betrug der Stopfdruckwert, auf dem geregelt wurde, 3 bar.

Die untere Darstellung verdeutlicht das mittlere Plastifizierdrehmoment, also das Drehmoment, mit dem die Plastifizierschnecke der Einspritzeinheit angetrieben werden muss (Messpunktsymbol quadratisch) sowie die mittlere Rücklaufgeschwindigkeit der Plastifizierschnecke (Messpunktsymbol Raute).

Es ist bei einem stabilen Stopfdruck ein stabiles Dosierverhalten mit einer geringen Schwankungsbreite des Plastifizierdrehmoments sowie der Rücklaufgeschwindigkeit erkennbar. Des Weiteren ergeben sich bei einem höheren Stopfdruck ein höheres Plastifizierdrehmoment sowie eine höhere Rücklaufgeschwindigkeit, was auf einen höheren Fördervolumenstrom deutet. Erst ein sehr niedriger Trichterfüllstand (Vorratsbehälterfüllstand), welcher bereits zu Fehlteilen führen kann, wird in den Betriebsparametern der Plastifizierschnecke sichtbar.

Dies wird in Figur 2 anhand des mittleren Plastifizierdrehmoments und der mittleren Rücklaufgeschwindigkeit für die Verarbeitung eines Ballens dargestellt. Bei der vertikalen, gestrichelten Linie wird nachgefüllt. Erst bei den letzten 30 Zyklen ist ein Abfallen des Plastifizierdrehmoment erkennbar, was auf den abnehmenden Fördervolumenstrom mangels Materials zurückzuführen ist. Somit sind Messungen der indirekten Parameter der Plastifizierschnecke lediglich dafür geeignet, einen bereits eingetretenen Materialmangel zu diagnostizieren. Eine kontinuierliche Füllmengenanzeige einer automatischen Zuführeinheit ist damit nicht realisierbar. Bei einem starren trichter- und rieselfähigen Material kann dagegen durchaus der Füllstand im Plastifizierdrehmoment erkennbar sein, da es zu keiner aktiven Förderung des Materials kommt und rieselfähiges Material oftmals zum Schichtaufbau im Trichter tendiert. Dies führt analog zum Plastifizieren zu Viskositätsänderungen, die im Plastifizierdrehmoment erkennbar sind.

Aufgabe der Erfindung ist es daher, eine kontinuierliche Füllmengenanzeige für eine automatische Zuführvorrichtung, insbesondere eine Spritzgießmaschine oder eines Extruders anzugeben, mit welcher kontinuierlich der Füllstand des im Vorratsbehälter befindlichen Materials ermittelt werden kann, auch wenn das Material im Vorratsbehälter kein rieselfähiges, fließfähiges, oder dergleichen Material ist, sondern beispielsweise ein teigartiges, knetbares, zur Ballenbildung neigendes Material ist. Zudem soll die Erfindung die Aufgabe lösen, mit minimaler Zusatzausstattung maschineller oder bauteilmäßiger Art auszukommen, insbesondere soll eine Vermeidung von optischer Sensorik, wie z. B. freistrahlende Messeinrichtungen, vermieden werden.

Weiterhin soll die Erfindung ein Verfahren zur Verfügung stellen, mit dem in einfacher Art und Weise Füllstände oben bereits genannter Materialien, also insbesondere teigartiger, zur Ballen- oder Klumpenbildung neigender Materialien, wie aber auch für fließfähige, rieselfähige, oder dergleichen Materialien insbesondere kontinuierlich ermittelt. Diese Aufgabe wird mit einem Verfahren mit den Merkmalen des Anspruchs 1 sowie mit einer Vorrichtung mit den Merkmalen des Anspruchs 12 und einer Spritzgießmaschine/Extrudereinheit mit den Merkmalen des Anspruchs 16 gelöst.

Ein erfindungsgemäßes Verfahren zum Überwachen eines Füllzustandes einer Zuführvorrichtung weist die folgenden Schritte auf:
- Bereitstellen einer Zuführvorrichtung mindestens aufweisend einen um eine Achse A antreibbar rotierbaren Vorratsbehälter,
- Betreiben der Zuführvorrichtung durch motorisches Antreiben des Vorratsbehälters um die Achse A,
- Befüllen des Vorratsbehälters mit zu förderndem Material.

Es ist weiterhin dadurch gekennzeichnet, dass:
- ein Antriebsdrehmoment M, welches zum Antrieb des Vorratsbehälters um die Achse notwendig ist oder ein hierzu korrespondierendes Antriebsmoment, gemessen und beobachtet wird und
- aus dem Antriebsdrehmoment M des Vorratsbehälters auf einen Füllstand des Materials im Vorratsbehälter geschlossen wird.

Mit einem solchen Verfahren ist in einfacher Art und Weise möglich, kontinuierlich Füllzustände einer Füllvorrichtung zu ermitteln und insbesondere einer Maschinensteuerung zur Verfügung zu stellen.

Ein weiterer besonderer Vorteil ist, dass das erfindungsgemäße Verfahren unabhängig ist von dem in der Zuführvorrichtung, insbesondere deren Vorratsbehälter eingebrachten Material. Materialspezifische Parameter und deren Änderungsverhalten mit sich ändernden Umgebungsbedingungen brauchen nicht bekannt zu sein.

Erfindungsgemäß wurde erkannt, dass die Messung des Antriebsmoments, welches notwendig ist, um den Vorratsbehälter um seine Rotationsachse zu rotieren, bereits ausreicht, um eine zuverlässige Aussage über den Füllstand des Vorratsbehälters zu erhalten.

Unter dem Antriebsmoment M im Sinne der Erfindung ist nicht nur genau das Antriebsmoment zu verstehen, mit welchem der Vorratsbehälter selbst angetrieben werden muss, sondern auch hierzu korrespondierende Antriebsmomente, beispielsweise an einem Elektromotor oder einer sonstigen Antriebseinrichtung, die für den Antrieb des Vorratsbehälters verwendet wird. Gegebenenfalls können zwischen einem an der Antriebseinrichtung (Elektromotor, Hydraulikmotor oder dergleichen) gemessenen Drehmoment und dem tatsächlichen Antriebsmoment M des Vorratsbehälters Unterschiede vorhanden sein, die beispielsweise durch die Zwischenschaltung einer Getriebestufe, sei es ein Zahnradgetriebe, ein Schneckengetrieben, ein Riemengetriebe oder dergleichen, auftreten. Im Ergebnis kann somit aus dem Antriebsmoment M des Vorratsbehälters selbst oder einem zur Erzeugung des Antriebsmoments M notwendigen und zum Antriebsmoment M korrespondierenden Antriebsmoment eine zuverlässige Aussage geliefert werden. Zweckmäßig kann es sein, ein korrespondierendes Antriebsmoment beispielsweise an einem Elektromotor zu messen und bei z. B. bekannter Getriebeübersetzung in das Antriebsmoment M des Vorratsbehälters umzurechnen. Insoweit ist der Begriff "Antriebsmoment M" im Sinne der vorliegenden Anmeldung so zu verstehen, dass hierbei auch jedes hierzu korrespondierende Antriebsdrehmoment einer Antriebseinrichtung, wie z. B. eines Antriebsmotors, mit umfasst ist.

Mit Vorteil kann das Verfahren für nicht selbstständig einzugsfähige Materialien, welche insbesondere überwiegend zu Ballen- und Klumpenbildung neigen, also von ihrer Konsistenz sehr teigartig sind, angewandt werden. Solche Materialien neigen zu einer ungleichförmigen Verteilung der Materialmasse im Vorratsbehälter, so dass bisherige Technologien im Vergleich zur Erfindung hier Fehlmessungen erzeugen. In anderen Worten bedeutet dies, dass die Erfindung nicht auf einem gleichmäßigen Füllstand im Sinne eines Füllstandlevels oder eines Füllstandpegels angewiesen ist.

In einer weiteren vorteilhaften Ausführungsform ist die Erfindung dadurch gekennzeichnet, dass die nicht selbstständig einzugsfähigen Materialien teigartig knetfähige Silikonmaterialien oder Polyestermaterialien sind, die insbesondere faserbeladen, z. B. glasfaserbeladen sind. Als solche nicht selbstständig einzugsfähigen Materialien werden oftmals teigartige, knetfähige Silikonmaterialien oder Polyestermaterialien verwendet, welche in bestimmten Anwendungsfällen faserbeladen, z. B. glasfaserbeladen sein können. Es hat sich gezeigt, dass die Erfindung mit Vorteil für diese Materialien einsetzbar ist.

Das zu fördernde Material kann ein Lösungsmittel, insbesondere Styrol enthalten. Für das erfindungsgemäße Verfahren ist dies kein Hindernis. Es ist mit Vorteil für derartige Materialen anwendbar. Darüber hinaus kann mit dem erfindungsgemäßen Verfahren und der Information, wie lange das entsprechende, zu fördernde Material sich bereits im Vorratsbehälter befindet, auch eine Aussage über den Materialzustand des im Vorratsbehälter befindlichen Materials getroffen werden. Dies ist bei Materialien enthaltend Styrol als Lösemittel besonders wichtig, da Styrol bereits über kürzere Zeit hinweg aus dem Material verdampft und die Materialeigenschaften nicht unwesentlich durch das dann in geringerem Maße enthaltene Lösungsmittel beeinträchtigt werden können.

In einer weiteren vorteilhaften Ausführungsform ist die Erfindung dadurch gekennzeichnet, dass während der Füllstandsmessung ein Stopfdruck des geförderten Materials konstant gehalten wird. Die Füllstandsmessung kann grundsätzlich zwar unabhängig von einem Stopfdruck des geförderten Materials in einer Förderschnecke der Zuführvorrichtung durchgeführt werden. Für die Konsistenz der Materialförderung zum Herstellen von Spritzgussteilen oder Spritzprägeteilen ist es jedoch besonders vorteilhaft, in Kenntnis einer korrektes Füllstandes auch den Stopfdruck konstant zu halten, da dann mit einer verbesserten (vergleichmäßigten) Füllung der Plastifizierschnecke gerechnet werden kann, was schlussendlich zu einer besseren Bauteilqualität aufgrund konstanterer Formwerkzeugfüllung führt.

In einer weiteren vorteilhaften Ausführungsform der Erfindung ist diese dadurch gekennzeichnet, dass bei dem Unterschreiten eines Grenzwertes Mₘᵢₙ für das Antriebsdrehmoment M des Vorratsbehälters eine Nachfüllung des Vorratsbehälters vorgenommen wird. In vorteilhafter Art und Weise ist als Auslöser bzw. als Triggerwert für das Nachfüllen des Vorratsbehälters in einem z. B. kontinuierlichen Betrieb der Zuführvorrichtung ein bestimmter unterer Grenzwert Mₘᵢₙ vorgesehen, der eine Minimalmenge des zu verarbeitenden Materials im Vorratsbehälter repräsentiert. Ein solcher unterer Grenzwert sollte nach Möglichkeit nicht unterschritten werden. Der untere Grenzwert ist derart gewählt, dass bei Erreichen des unteren Grenzwertes Mₘᵢₙ noch keine signifikant verringerte Bauteilqualität des Spritzgießprozesses erwartet werden muss.

In einer weiteren bevorzugten Ausführungsform ist das erfindungsgemäße Verfahren insbesondere dadurch gekennzeichnet, dass die Erfassung des Füllstandes des Vorratsbehälters kontinuierlich durch Messung des Antriebsdrehmomentes des Vorratsbehälters erfolgt. In besonderer Art und Weise eignet sich das erfindungsgemäße Verfahren zu einer kontinuierlichen Messung des Füllstandes des Vorratsbehälters. Dies erfolgt gemäß dieser Ausführungsform kontinuierlich durch Messung des Antriebsmomentes des Vorratsbehälters. Unter "kontinuierlich" in diesem Sinne ist zu verstehen, dass über eine gewisse Zeit eine gewisse Mindestanzahl von Messungen erfolgen sollte. Im Gegensatz dazu ist unter "diskontinuierlich" im Sinne der Erfindung zu verstehen, dass beispielsweise lediglich - wie im Stand der Technik praktiziert - ein Alarm ausgelöst wird, wenn ein bestimmter Wert unteroder überschritten wird. Als Beispiel sei angegeben, dass unter einer kontinuierlichen Messung eine Mehrfachmessung in einem bestimmten Zeitraum, beispielsweise z. B. 1 Messung pro Sekunde oder 5 Messungen pro Minute oder dergleichen stattfinden. Wesentlich ist, dass bei einer kontinuierlichen Messung über die Zeit ein gewisser Messwertverlauf durch Interpolation oder Extrapolation Aussagen über einen Füllstandsverlauf möglich sind. In anderen Worten bedeutet dies, dass kontinuierlich im Sinne der Erfindung jedenfalls nicht erfordert wird, dass eine ständige, dauerhafte, im analogen Sinne ununterbrochene Messung stattfinden muss. Es reichen vielmehr diskrete Messungen, die allerdings in einem derartig kurzen Zeitraum aufeinanderfolgend stattfinden, dass über einen Vorratsbehälterfüllstand eine zeitlich kontinuierliche Aussage möglich ist, die zudem technisch sinnvoll ist.

Eine solche kontinuierliche Messung des Antriebsmomentes lässt in einfacher Art und Weise eine kontinuierliche Aussage über den Füllstand zu.

Eine weitere Ausführungsform der vorliegenden Erfindung ist dadurch gekennzeichnet, dass aus dem Füllstand des zur Zuführung vorgesehenen Materials im Vorratsbehälter eine mittlere Verweilzeit t_{v, mittel} des Materials im Vorratsbehälter bestimmt wird. Ein Füllstand des zur Zuführung vorgesehenen Materials zusammen mit einer Information, wann zuletzt Frischmaterial nachgefüllt wurde, erlaubt eine Vorhersage einer mittleren Verweilzeit t_{v, mittel} des Materials im Vorratsbehälter. Diese mittlere Verweilzeit kann in einer weitere Ausführungsform der Erfindung wertvolle Informationen zur mittleren Dauer des Materials im Behälter und somit zum Restgehalt des Lösungsmittels, insbesondere des Styrols liefern.

In einer weiteren Ausführungsform der vorliegenden Erfindung ist das Verfahren dadurch gekennzeichnet, dass aus der mittleren Verweilzeit t_{v mittel} des Materials eine Vorhersage der bereits durch Verdampfung entwichenen Lösungsmittelmenge, insbesondere Styrolmenge geschlossen wird.

Somit kann ein wesentlicher Materialeigenschaftswert, nämlich der Gehalt des Lösungsmittels, insbesondere der mittlere Gehalt des Lösungsmittels einer im Vorratsbehälter durch Mischgutmasse bestimmt werden. Da der Gehalt des Lösungsmittels in der Rohmasse einen wesentlichen Einfluss auf dessen Fließfähigkeit und Viskositätsverhalten in der Plastifiziereinheit und sowie insbesondere auf das Vernetzungsverhalten im Spritzgusswerkzeug hat, ist diese Information bereits zum Zeitpunkt vor der Zuführung des Materials in die Plastifiziereinheit ein wichtiger, aussagekräftiger Faktor.

Durch eine derartige Information kann bei einem längeren Stillstand der Maschine, in der das Material genug Zeit hat, eine bestimmte Styrolmenge auszudampfen, zur Verhinderung von Schlechtbauteilen eine bestimmte Menge Frischmaterial hinzugefügt werden, um anhand des Füllstandverhältnisses der im Trichter verweilten Menge zu dem zugeführten Frischmaterial dann eine neue mittlere Verweilzeit des Mischmaterials aus Alt- und Neumaterial zu erhalten, wobei dann aus der neu erhaltenen mittleren Verweilzeit, die dann geringer ist, auch Aussage über einen neuen gegenüber dem vorherigen Stand erhöhten Anteil des Lösungsmittels, insbesondere des Styorls möglich ist. Somit kann also bei einem längeren Stillstand der Maschine, wenn Informationen zur Verweilzeit des Materials im Vorratsbehälter bekannt sind, ohne die Inkaufnahme von Schlechtteilen bereits vor der Plastifizierung von Material im Vorratsbehälter ein wesentlicher Rohmaterialparameter auf ein für den Verarbeitungsprozess notwendiges Maß eingestellt werden.

In einer weiteren vorteilhaften Ausführungsform der Erfindung ist diese dadurch gekennzeichnet, dass eine mittlere Verweilzeit durch Zugabe von Frischmaterial in den Vorratsbehälter oberhalb des vorbestimmten Grenzwertes Mₘᵢₙ gebracht wird.

In einer weiteren vorteilhaften Ausführungsform der Erfindung ist diese dadurch gekennzeichnet, dass das Erreichen des vorbestimmten Grenzwertes Mₘᵢₙ über das Erreichen eines vorbestimmten Antriebsdrehmoments Mt des Vorratsbehälters erkannt wird.

Erfindungsgemäß wurde bei dieser vorteilhaften Ausführungsform erkannt, dass das Antriebsmoment Mt des Vorratsbehälters mit der Materialmenge im Vorratsbehälter korreliert bzw. direkt von dieser abhängig ist, so dass ein Grenzwert, ab dem beispielsweise Nachfüllungen stattfinden, einfach aus dem Antriebsdrehmoment des Vorratsbehälters ermittelt werden kann.

Ein zweiter Aspekt der Erfindung betrifft eine Vorrichtung zum Durchführen des obigen Verfahrens, welche einen um die Achse A rotierbaren Vorratsbehälter aufweist. Eine solche Vorrichtung ist dadurch gekennzeichnet, dass mindestens ein Messaufnehmer vorhanden ist, der eingerichtet und ausgebildet ist, ein Messsignal zu erzeugen, welches mit dem Antriebsdrehmoment Mt des Vorratsbehälters korrespondiert und eine Auswerteinheit vorhanden ist, welches das Antriebsdrehmomentsignal verarbeitet und in ein Füllstandsignal umwandelt.

Mit einer solchen Vorrichtung gelingt es in einfacher Art und Weise das erfindungsgemäße Verfahren durchzuführen.

In einer vorteilhaften Ausführungsform besitzt die Vorrichtung zudem eine um eine Achse B rotierbare Förderschnecke, wobei die Achse A des Vorratsbehälters und die Achse B der Förderschnecke miteinander einen Winkel α > 0 einschließen oder windschief zueinander angeordnet sind.

In einer weiteren vorteilhaften Ausführungsform der Vorrichtung ist der Vorratsbehälter, der z. B. eine trichterförmige oder zylinderförmige Raumform hat, und die Achse A gegenüber der Vertikalen geneigt ist oder vertikal angeordnet.

In einer weiteren vorteilhaften Ausführungsform der Vorrichtung ist die Vorrichtung zur Verarbeitung von Thermoplasten, Feuchtpolyestermassen, Feststoffsilikonen für Spritzgieß- wie auch für Extrudereinheiten angepasst. Dies stellt eine universelle Einsetzbarkeit der Vorrichtung sicher.

Schlussendlich betrifft die Erfindung eine Spritzgießmaschine/Extrudereinheit, welche eine Vorrichtung gemäß der Erfindung umfasst.

Im Folgenden wird die Erfindung anhand der Zeichnung näher erläutert. Es zeigen:
- Figur 1:: den mittleren Stopfdruck und die mittlere Förderschneckendrehzahl (oben) und das mittlere Plastifizierdrehmoment und die mittlere Rücklaufgeschwindigkeit (unten) ohne und mit Stopfdruckregelung bei verschiedenen Stopfdrucksollwerten;
- Figur 2:: das mittlere Plastifizierdrehmoment und die mittlere Rücklaufgeschwindigkeit bei sinkendem Trichterfüllstand;
- Figur 3:: das mittlere Antriebsdrehmoment des Einfülltrichters über einen Versuchszeitraum mit variierenden Einfüllmengen;
- Figur 4:: eine Vorrichtung zum Durchführen des Verfahrens einer stark schematisierten Darstellung.

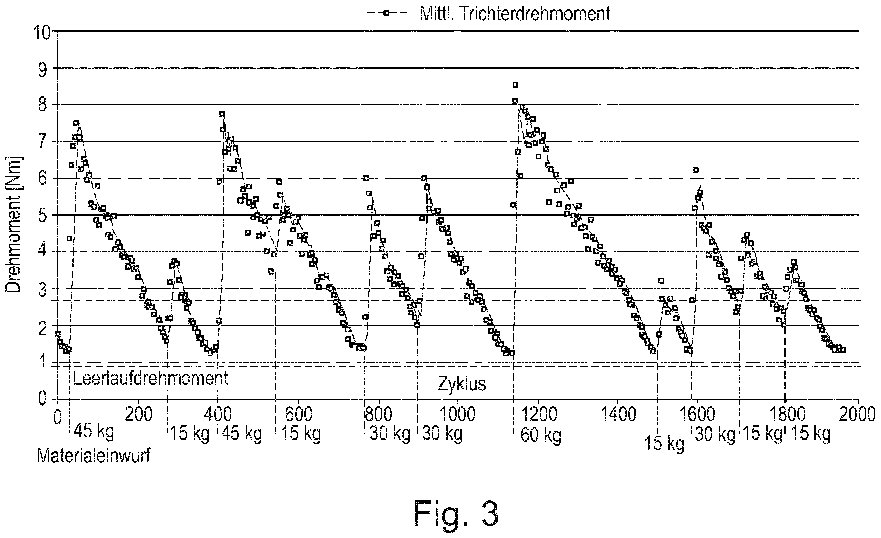

Untersuchungen haben ergeben, dass ein Antriebsdrehmoment M eines Vorratsbehälters 2 (Trichterdrehmoment) zur kontinuierlichen Erfassung der Füllmenge des Trichters/Vorratsbehälters herangezogen werden kann. Des Weiteren wurden Verweilzeiteffekte bei der Verarbeitung von Polyesterformmassen detektiert, welche durch ein optimiertes Nachfüllverhalten kompensiert werden. Der Kern der Erfindung wird im Folgenden anhand der Figuren 3 bis 4 erläutert.

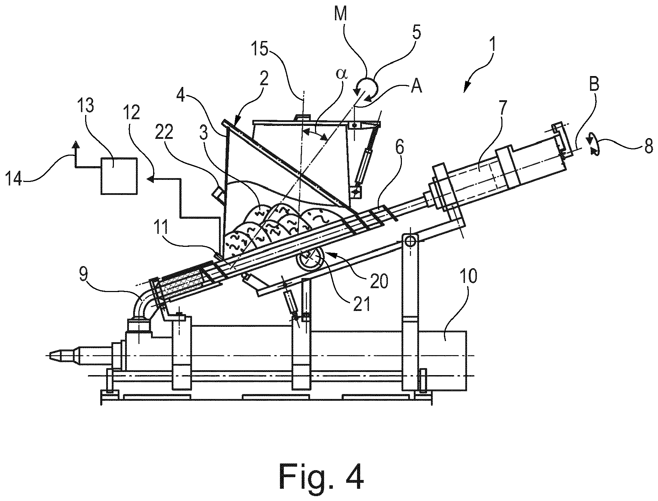

Zur Veranschaulichung des erfindungsgemäßen Verfahrens sowie der erfindungsgemäßen Vorrichtung und der hiermit erzielten Vorteile, sei zunächst beispielhaft anhand der Figur 4 der grundlegende Aufbau einer erfindungsgemäßen Zuführvorrichtung 1 erläutert.

Eine erfindungsgemäße Zuführvorrichtung 1 besitzt einen Vorratsbehälter 2 zur Aufnahme von zu förderndem Material 3. Im vorliegenden Ausführungsbeispiel der Zuführvorrichtung gemäß Figur 4 ist der Vorratsbehälter 2 im Wesentlichen ein kegelstumpfförmiger Behälter mit einer Vorratsbehälterwandung 4. Der kegelstumpfförmige Vorratsbehälter 2 ist um eine Achse A rotierbar antreibbar (Doppelpfeilrichtung 5). Dem Vorratsbehälter 2 ist hierzu eine Antriebseinrichtung 20 zugeordnet.

Im gezeigten Ausführungsbeispiel ist die Antriebseinrichtung 20 als Schneckengetriebe ausgebildet und besitzt einen Antriebsmotor 21, welcher eine Schnecke besitzt, die mit einem Zahnkranz 22 an einem Umfang des Vorratsbehälters 2 zusammenwirkt.

Parallel zu einer Mantellinie der Wandung 4 ist eine Förderschnecke 6 angeordnet, welche ein Inneres des Vorratsbehälters 2 durchdringt. Die Förderschnecke 6 ist um die Achse B motorisch mittels einer Antriebseinrichtung 7 antreibbar (Doppelpfeilrichtung 8). Die Förderschnecke 6 kommt mit dem zu förderndem Material 3 in Kontakt und fördert dieses aus dem Inneren des Vorratsbehälters 2 über eine Zuführleitung 9 zu einer Plastifiziereinheit 10. Die Plastifiziereinheit 10 ist in bekannter Art und Weise dazu eingerichtet und ausgebildet, in geeigneter Art und Weise einer Spritzgießmaschine (nicht gezeigt) oder einer Extrudereinheit (nicht gezeigt) zuzuführen.

Des Weiteren besitzt die Zuführvorrichtung 1 einen Messaufnehmer 11 insbesondere am Antriebsmotor des Trichters, welcher das Antriebsmoment M, also das Antriebsdrehmoment, misst, welches notwendig ist, um den Vorratsbehälter 2 um die Achse A zu rotieren. Der Messsensor stellt somit ein Messsignal 12 zur Verfügung, welches mit dem Antriebsdrehmoment M korrespondiert. Das Messsignal 12 wird zu einer Auswerteeinheit 13 ausgegeben, welche dazu eingerichtet und ausgebildet ist, das Messsignal 12, welches mit dem Antriebsdrehmoment M korrespondiert, in ein Füllstandsignal 14 zu überführen. Das Füllstandsignal 14 wird anschließend entweder einer Anzeigeeinrichtung, z. B. einem Display (nicht gezeigt), einer Maschinensteuerung (nicht gezeigt), oder anderen geeigneten Einrichtungen, übertragen.

Selbstverständlich kann zwischen dem Antriebsmotor des Trichters und dem Vorratsbehälter 2 in irgendeiner Art und Weise eine Getriebevorrichtung (nicht gezeigt) vorgesehen sein. Ein am Antriebsmotor gemessenes Antriebsmoment M kann in einem solchen Fall selbstverständlich unter Zuhilfenahme der gewählten Getriebeübersetzung und gegebenenfalls unter Berücksichtigung von Getriebewirkungsgraden und Lagerreibungsverlusten in das Antriebsmoment M, welches tatsächlich den Vorratsbehälter 2 antreibt, umgerechnet werden.

Weiterhin ist für eine erfindungsgemäße Zuführvorrichtung 1 charakteristisch, dass die Achse A, um die der Vorratsbehälter 2 rotierbar ist, gegenüber einer Vertikalen 15 geneigt ist, beispielsweise um einen Winkel α geneigt ist. Eine derartige Zuführvorrichtung 1, welche in Figur 4 schematisch dargestellt ist, wurde zur Ermittlung und Erforschung nachfolgend erläuterter Zusammenhänge herangezogen. Grundsätzlich besteht allerdings auch die Möglichkeit, anstelle des kegelstumpfförmigen Vorratsbehälters 2 auch andere geometrische Raumformen für Vorratsbehälter zu verwenden. Ebenso ist die relative Anordnung der Förderschnecke 6 zum Vorratsbehälter 2 bzw. dessen Wandung 4 von untergeordneter Relevanz. Wesentlich ist, dass der Vorratsbehälter 2 um eine gegebenenfalls zur Vertikalen 15 schräggestellte Achse A unter Aufbringung eines Antriebsmoments M antreibbar ausgebildet ist und einen entsprechenden Messsaufnehmer 11 oder eine andere Einrichtung zum Aufnehmen von Drehmomentdaten besitzt, mit welchen das Antriebsdrehmoment M gemessen werden kann, welches notwendig ist, um den Vorratsbehälter 2 um die Achse A drehbar anzutreiben.

Die Nutzung des Antriebsdrehmoments M als Maß für einen Füllstand des Vorratsbehälters 2 bietet eine kontinuierliche und zuverlässige Füllmengenanzeige, die für automatische Befüllsysteme ohne zusätzliche Hardwarekosten genutzt werden kann. Da es sich um eine reine Softwarelösung handelt, entstehen keine laufenden Kosten. Durch die zusätzliche Betrachtung der Verweilzeit kann das Nachfüllverhalten im Hinblick auf eine Kompensation der Styrolverdunstung optimiert werden. Bei niedrigem Antriebsdrehmoment M kann die Förderschneckendrehzahl bei aktivierter Stopfdruckregelung begrenzt werden, um ein unnötiges Scheren des Materials zu vermeiden.

Das System ist neben den Feuchtpolyestermassen auch für die Verarbeitung von Feststoffsilikonen sowohl für alle Trichtergrößen und Trichterneigungen für Spritzgieß- als auch Extrudereinheiten nutzbar.

Das erfindungsgemäße Verfahren, welches beispielsweise mit einer Vorrichtung zum Durchführen des Verfahrens gemäß Figur 4 durchgeführt werden kann, soll nunmehr beispielhaft anhand der Figur 3 erläutert werden.

Auf der horizontalen Achse der Figur 3 ist die Zyklusanzahl angegeben. Diese reicht von Zyklus Nr. 0 bis Zyklus Nr. 2000. An der linken vertikalen Achse ist das Antriebsmoment M (Drehmoment) in Nm angegeben, welches zum Antreiben des Vorratsbehälters 2 notwendig ist. Das dazugehörige Zeichen für die unterschiedlichen Messpunkte ist das gefüllte schwarze Quadrat.

Mit vertikalen gestrichelten Linien ist jeweils ein sogenannter Materialeinwurf angegeben. Der Materialeinwurf bedeutet, dass eine Erst- oder Neubefüllung/Nachfüllung des Vorratsbehälters 2 durch Einwurf von neuem ballenartigem Material 3 in dem Vorratsbehälter erfolgt. Eine Erstbefüllung findet gemäß Figur 3 somit bei ca. Schussnr. 25 statt. Es werden 45 kg Rohmaterial eingeworfen. Dies hat gemäß der unteren Messkurve (mittleres Trichterdrehmoment, d. h. Antriebsdrehmoment M) zur Folge, dass ausgehend von einem Leerlaufdrehmoment in Höhe von ca. 1 Nm das zum Antrieb des Vorratsbehälters notwendige Antriebsmoment M mit dem Einwurf von Frischmaterial auf einen Höchstwert von ca. 7,5 Nm ansteigt. Nach Zugabe des Frischmateriales nimmt das Antriebsmoment M (das mittlere Trichterdrehmoment) kontinuierlich von Schuss zu Schuss, d. h. mit der Zeit, in nahezu linearer Art und Weise ab. Bei Schussnr. 250 ist die Menge des Ausgangsmateriales (Erstbefüllung von 45 kg (6 Ballen)) nahezu aufgebraucht, was sich daran zeigt, dass das mittlere Trichterdrehmoment nur noch geringfügig über dem Leerlaufdrehmoment liegt. Bei Schuss Nr. ca. 250 wird ein Ballen von 15 kg nachgeworfen, was zu einem Anstieg des mittleren Trichterdrehmoments auf einen Wert um 3,8 Nm führt. Bei Schuss 400 wird erneut Rohmaterial in größerer Menge zugeführt (3 Ballen ä 15 kg; 45 kg). Es ist ersichtlich, dass das mittlere Trichterdrehmoment (Antriebsmoment M) aufgrund des höheren Füllstandes wieder auf Werte zwischen 7,0 Nm und 7,5 Nm ansteigt. Es bildet sich über die Zeit ein sägezahnförmiger Verlauf aus.

Das vorstehend beschriebene "Sägezahnmuster" des Antriebsdrehmoments M wirkt sich auf das Bauteilgewicht aus. Ab einer bestimmten Verweilzeit schlägt sich der niedrige, durch Verdunstung ausgetretene Styrolanteil in einem Anstieg des Bauteilgewichts nieder. Durch Zugabe von Frischmaterial wird somit in dem Materialmix, welches sich im Vorratsbehälter 2 befindet, die mittlere Lösungsmittelkonzentration, d. h., z. B. die Styrolkonzentration, erhöht, wodurch sich bei der Verarbeitung eines solchen Materiales ein geringeres Bauteilgewicht ergibt. Nach längeren Stillstandzeiten der Maschine, beispielsweise über das Wochenende, verdampft eine größere Menge Styrol, was einen zunehmenden Bauteilgewichtsanstieg zur Folge hat. Der "Ausreißer nach oben" hinsichtlich des Bauteilgewichts ist dadurch zu erklären, dass das Lösungsmittel verdampft ist und somit ein Material höherer Dichte in die Kavitäten von Werkzeugen gespritzt wurde, so dass ein höheres Bauteilgewicht resultierte.

Durch Nachfüllen mit Frischmaterial kann somit der Lösungsmittelgehalt auf ein gewünschtes Maß gebracht werden, wodurch das Bauteilgewicht ebenfalls im gewünschten Rahmen gehalten werden kann.

Aufgrund der Anzahl der Schüsse, die beispielsweise mittels eines Zählwerkes laufend ermittelt werden und der hierfür verstrichenen Zeit kann erfindungsgemäß somit in einfacher Art und Weise eine mittlere Verweilzeit des Rohmaterials im Vorratsbehälter abgeliefert werden. Steigt die mittlere Verweilzeit des Rohmaterials im Vorratsbehälter über einen bestimmten Wert an, so ergeben sich unzulässig hohe Bauteilgewichte.

Somit ist es indirekt auch möglich, über die Ermittlung des Füllstandes des Vorratsbehälters gemäß dem erfindungsgemäßen Verfahren auch Aussagen zur mittleren Verweilzeit des Rohmaterials im Vorratsbehälter zu treffen und somit bereits hieraus Qualitätsvorhersagen treffen zu können. Somit kann in einfacher Art und Weise durch Zugabe von Frischmaterial und deren rechnerischer Berücksichtigung die mittlere Verweilzeit (t_{v, mittel}) unterhalb eines vorbestimmten Grenzwertes gehalten werden. Dies gelingt dadurch, dass durch Messung des Antriebsdrehmomentes M des Vorratsbehälters 2 und der oben erläuterten Korrelation der Bauteilgewichte zu den Drehmomenten es ausreichend ist, dass zur Bestimmung eines günstigen Nachfüllzeitpunktes das Antriebsmoment M (das mittlere Trichterdrehmoment) oberhalb eines vorbestimmten Drehmomentgrenzwertes (Grenzwert Mₘᵢₙ) gehalten wird.

Zusammen mit den Informationen über Schussdauer und Schussanzahl kann hierdurch in einfacher Art und Weise, ohne zusätzliche Hardware-Maßnahmen auch eine Aussage über die mittlere Verweilzeit des Materials im Vorratsbehälter und im weiteren Verlauf über das zu erwartende Bauteilgewicht gemacht werden.

Somit kann durch das erfindungsgemäße Verfahren bereits in einem Betriebszustand der Zuführvorrichtung vor der Plastifiziereinheit eine Aussage über eine mögliche Bauteilqualität gemacht werden und Maßnahmen ergriffen werden, die diese Bauteilqualität positiv beeinflussen.

### Bezugszeichenliste

- 1: Zuführvorrichtung
- 2: Vorratsbehälter
- 3: Zu förderndes Material
- 4: Wandung
- 5: Doppelpfeilrichtung
- 6: Förderschnecke
- 7: Antriebseinrichtung
- 8: Doppelpfeilrichtung
- 9: Zuführleitung
- 10: Plastifiziereinheit
- 11: Messaufnehmer
- 12: Messsignal
- 13: Auswerteeinheit
- 14: Füllstandsignal
- 15: Vertikale
- 20: Antriebseinrichtung
- 21: Antriebsmotor
- 22: Zahnkranz
- α: Winkel
- A: Achse
- B: Achse
- M: Antriebsdrehmoment
- Mₘᵢₙ: Grenzwert
- tᵥ: Verweilzeit
- t_{v, mittel}: Mittlere Verweilzeit

## Patentansprüche

1. Verfahren zum Überwachen eines Füllzustandes einer Zuführvorrichtung (1) aufweisend die folgenden Schritte:
- Bereitstellen einer Zuführvorrichtung (1) mindestens aufweisend einen um eine Achse (A) antreibbar rotierbaren Vorratsbehälter (2),
- Betreiben der Zuführvorrichtung (1) durch motorisches Antreiben des Vorratsbehälters (2) um die Achse (A),
- Befüllen des Vorratsbehälters (2) mit zu förderndem Material (3), **dadurch gekennzeichnet, dass**
- ein Antriebsdrehmoment (M), welches zum Antrieb des Vorratsbehälters (2) um die Achse (A) notwendig ist oder mit diesem korrespondiert, gemessen und beobachtet wird und
- aus dem Antriebsdrehmoment (M) des Vorratsbehälters (2) auf einen Füllstand des Materials im Vorratsbehälter (2) geschlossen wird.

2. Verfahren nach Anspruch 1,
**dadurch gekennzeichnet, dass**
das Verfahren auf nicht selbstständig einzugsfähige Materialien angewandt wird.

3. Verfahren nach Anspruch 2,
**dadurch gekennzeichnet, dass**
die nicht selbstständig einzugsfähigen Materialien teigartig knetfähige Silikonmaterialien oder Polyestermaterialien sind, die insbesondere faserbeladen, z. B. glasfaserbeladen sind.

4. Verfahren nach Anspruch 2,
**dadurch gekennzeichnet, dass**
zu förderndes Material (3) ein Lösungsmittel, insbesondere Styrol enthält.

5. Verfahren nach einem der vorangegangenen Ansprüche,
**dadurch gekennzeichnet, dass**
während der Füllstandsmessung ein Stopfdruck des geförderten Materials konstant gehalten wird.

6. Verfahren nach einem der vorangegangenen Ansprüche,
**dadurch gekennzeichnet, dass**
bei Unterschreiten eines Grenzwertes (Mₘᵢₙ) für das Antriebsdrehmoment (M) des Vorratsbehälters (2) eine Nachfüllung des Vorratsbehälters (2) vorgenommen wird.

7. Verfahren nach einem der vorangegangenen Ansprüche,
**dadurch gekennzeichnet, dass**
die Erfassung des Füllstandes des Vorratsbehälters (2) kontinuierlich durch Messung des Antriebsdrehmomentes (M) des Vorratsbehälters (2) erfolgt.

8. Verfahren nach einem der vorangegangenen Ansprüche,
**dadurch gekennzeichnet, dass**
aus dem Füllstand des zur Zuführung vorgesehenen Materials (3) im Vorratsbehälter (2) eine mittlere Verweilzeit (t_{v, mittel}) des Materials im Vorratsbehälter (2) bestimmt wird.

9. Verfahren nach einem der vorangegangenen Ansprüche,
**dadurch gekennzeichnet, dass**
aus der mittleren Verweilzeit (t_{v mittel}) des Materials eine Vorhersage der bereits durch Verdampfung entwichenen Lösungsmittelmenge (Styrolmenge) geschlossen wird.

10. Verfahren nach einem der vorangegangenen Ansprüche,
**dadurch gekennzeichnet, dass**
eine mittlere Verweilzeit (t_{v mittel}) durch Zugabe von Frischmaterial in den Vorratsbehälter (2) unterhalb eines vorbestimmten Grenzwertes (tvₘᵢₙ) gebracht wird.

11. Verfahren nach einem der vorangegangenen Ansprüche,
**dadurch gekennzeichnet, dass**
das Erreichen des vorbestimmten Grenzwertes (Mₘᵢₙ) über das Erreichen eines vorbestimmten Antriebsdrehmoments (Mt) des Vorratsbehälters (2) erkannt wird.

12. Vorrichtung zum Durchführen des Verfahrens nach einem oder mehreren der Ansprüche 1 bis 11,
aufweisend einen um eine Achse (A) rotierbaren Vorratsbehälter (2),
**dadurch gekennzeichnet, dass**
mindestens ein Messaufnehmer (11) vorhanden ist, der eingerichtet und ausgebildet ist, ein Messsignal (12) zu erzeugen, welches mit dem Antriebsdrehmoment (Mt) des Vorratsbehälters (2) korrespondiert und eine Auswerteeinheit (13) vorhanden ist, welche das Messsignal (12) verarbeitet und in ein Füllstandsignal (14) umwandelt.

13. Vorrichtung zum Durchführen des Verfahrens nach Anspruch 12,
**dadurch gekennzeichnet, dass**
die Vorrichtung eine um eine Achse (B) rotierbare Förderschnecke (6) aufweist, wobei die Achse (A) und die Achse (B) miteinander einen Winkel α > 0 einschließen oder windschief zueinander sind.

14. Vorrichtung zum Durchführen des Verfahrens nach einem der vorangegangenen Ansprüche,
**dadurch gekennzeichnet, dass**
der Vorratsbehälter (2), z. B. eine trichterförmige oder zylinderförmige Raumform hat, und die Achse (A) gegenüber der Vertikalen (15) geneigt ist oder vertikal angeordnet ist.

15. Vorrichtung zum Durchführen des Verfahrens nach einem der vorangegangenen Ansprüche,
**dadurch gekennzeichnet, dass**
die Vorrichtung zur Verarbeitung von Thermoplasten, Feuchtpolyestermassen, Feststoffsilikonen für Spritzgieß- wie auch für Extrudereinheiten angepasst ist.

16. Spritzgießmaschine/Extrudereinheit, aufweisend eine Vorrichtung mit den Merkmalen der Ansprüche 12 bis 15.

## Claims

1. A method for monitoring a filling level of a feeding device (1), having the following steps:
- providing a feeding device (1) having at least one storage container (2) which can be driven in rotation about an axis (A),
- operating the feeding device (1) by motorized driving of the storage container (2) about the axis (A),
- filling the storage container (2) with material (3) to be conveyed,
**characterized in that**
- a drive torque (M) which is necessary for driving the storage container (2) about the axis (A) or which corresponds thereto is measured and observed, and
- a conclusion as regards a filling level of the material in the storage container (2) is drawn from the drive torque (M) for the storage container (2).

2. The method as claimed in claim 1, **characterized in that** the method is applied to materials which are not automatically self-feeding.

3. The method as claimed in claim 2, **characterized in that** the materials which are not automatically self-feeding are dough-like, kneadable silicone materials or polyester materials which in particular are loaded with fibres, for example loaded with glass fibres.

4. The method as claimed in claim 2, **characterized in that** the material (3) to be conveyed contains a solvent, in particular styrene.

5. The method as claimed in one of the preceding claims, **characterized in that** during the measurement of the filling level, a packing pressure of the conveyed material is kept constant.

6. The method as claimed in one of the preceding claims, **characterized in that** if a limiting value (Mₘᵢₙ) for the drive torque (M) of the storage container (2) is not reached, refilling of the storage container (2) is carried out.

7. The method as claimed in one of the preceding claims, **characterized in that** the detection of the filling level of the storage container (2) is carried out continuously by measurement of the drive torque (M) of the storage container (2).

8. The method as claimed in one of the preceding claims, **characterized in that** a mean residence time (t_{v,mean}) of the material (3) in the storage container (2) is determined from the filling level of the material (3) in the storage container provided for feeding.

9. The method as claimed in one of the preceding claims, **characterized in that** a forecast of the quantity of solvent (styrene content) which has already escaped due to evaporation is made from the mean residence time (t_{v,mean}) of the material.

10. The method as claimed in one of the preceding claims, **characterized in that** a mean residence time (t_{v,mean}) is brought below a predetermined limiting value (tvₘᵢₙ) by adding fresh material to the storage container (2).

11. The method as claimed in one of the preceding claims, **characterized in that** reaching the predetermined limiting value (Mₘᵢₙ) is detected by reaching a predetermined drive torque (Mt) of the storage container (2) .

12. A device for carrying out the method as claimed in one or more of claims 1 to 11, having a storage container (2) which can be rotated about an axis (A), **characterized in that** at least one measuring sensor (11) is present which is configured and constructed to produce a measurement signal (12) which corresponds to the drive torque (Mₜ) of the storage container (2) and an evaluation unit (13) is present which processes the measurement signal (12) and converts it into a filling level signal (14).

13. The device for carrying out the method as claimed in claim 12, **characterized in that** the device has a screw conveyor (6) which can be rotated about an axis (B), wherein the axis (A) and the axis (B) together enclose an angle a > 0 or are skewed with respect to each other.

14. The device for carrying out the method as claimed in one of the preceding claims, **characterized in that** the storage container (2), which is in the shape of a hopper or a cylinder, for example, and the axis (A) are inclined with respect to the vertical (15), or it is disposed vertically.

15. The device for carrying out the method as claimed in one of the preceding claims, **characterized in that** the device is suitable for processing thermoplastics, moist polyester compounds, solid silicones for injection moulding units as well as for extruder units.

16. An injection moulding machine/extruder unit, having a device with the features of claims 12 to 15.

## Revendications

1. Procédé, destiné à superviser un niveau de remplissage d'un dispositif d'alimentation (1), comportant les étapes suivantes, consistant à :
- mettre à disposition un dispositif d'alimentation (1), comportant au moins un réservoir de stockage (2) rotatif en entraînement autour d'un axe (A),
- faire fonctionner le dispositif d'alimentation (1) par entraînement motorisé du réservoir de stockage (2) autour de l'axe (A),
- remplir le réservoir de stockage (2) avec une matière (3) à transporter,
**caractérisé**
- **en ce qu'**un couple d'entraînement (M), lequel est nécessaire pour entraîner le réservoir de stockage (2) autour de l'axe (A) ou correspond avec celui-ci, est mesuré et observé, et
- à partir du couple d'entraînement {M) du réservoir de stockage (2), il est déduit un niveau de remplissage de la matière dans le réservoir de stockage (2).

2. Procédé selon la revendication 1,
**caractérisé**
**en ce que** le procédé est utilisé pour des matières non susceptibles d'être amenées de manière autonome.

3. Procédé selon la revendication 2,
**caractérisé**
**en ce que** les matières non susceptibles d'être amenées de manière autonome sont des matières silicones pâteuses, malaxables ou des matières polyesters, qui sont notamment chargées en fibres, par exemple en fibres de verre.

4. Procédé selon la revendication 2,
**caractérisé**
**en ce que** de la matière (3) à transporter contient un solvant, notamment du styrène.

5. Procédé selon l'une quelconque des revendications précédentes,
**caractérisé**
**en ce que** pendant la mesure du niveau de remplissage, une pression de bourrage de la matière transportée est maintenue à un niveau constant.

6. Procédé selon l'une quelconque des revendications précédentes,
**caractérisé**
**en ce qu'**en cas de non-atteinte d'une valeur limite (Mₘᵢₙ) pour le couple d'entraînement (M) du réservoir de stockage (2), il est procédé à une recharge du réservoir de stockage (2).

7. Procédé selon l'une quelconque des revendications précédentes,
**caractérisé**
**en ce que** la détection du niveau de remplissage du réservoir de stockage (2) s'effectue en continu, par une mesure du couple d'entraînement (M) du réservoir de stockage (2).

8. Procédé selon l'une quelconque des revendications précédentes,
**caractérisé**
**en ce qu'**à partir du niveau de remplissage de la matière (3) prévue pour être alimentée, dans le réservoir de stockage (2), il est déterminé un temps de séjour (t_{v, moyen}) moyen de la matière dans le réservoir de stockage (2).

9. Procédé selon l'une quelconque des revendications précédentes,
**caractérisé**
**en ce qu'**à partir du temps de séjour (t_{v. moyen}) moyen de la matière, il est déduit une prévision de la quantité de solvant (quantité de styrène) qui s'est déjà échappée par évaporation.

10. Procédé selon l'une quelconque des revendications précédentes,
**caractérisé**
**en ce qu'**un temps de séjour (t_{v, moyen}) moyen est amené en-dessous d'une valeur limite (tᵥₘᵢₙ) prédéfinie, par ajout de matière fraîche dans le réservoir de stockage (2) .

11. Procédé selon l'une quelconque des revendications précédentes,
**caractérisé**
**en ce que** l'atteinte de la valeur limite (tᵥₘᵢₙ) prédéfinie est identifiée via l'atteinte d'un couple d'entraînement (Mₜ) prédéfini du réservoir de stockage (2).

12. Dispositif, destiné à réaliser le procédé selon l'une quelconque ou plusieurs des revendications 1 à 11,
comportant un réservoir de stockage (2) rotatif autour d'un axe (A),
**caractérisé**
**en ce qu'**au moins un enregistreur de mesure (11) est présent, qui est aménagé et conçu pour générer un signal de mesure (12), lequel correspond avec le couple d'entraînement (Mt) du réservoir de stockage (2) et en ce qu'une unité d'évaluation (13) est présente, laquelle traite le signal de mesure (12) et le convertit en un signal (14) de niveau de remplissage.

13. Dispositif, destiné à réaliser le procédé selon la revendication 12,
**caractérisé**
**en ce que** le dispositif comporte un convoyeur à vis (6) rotatif autour d'un axe (B), l'axe (A) et l'axe (B) incluant l'un avec l'autre un angle α > 0 ou étant placés en gauchis l'un par rapport à l'autre.

14. Dispositif, destiné à réaliser le procédé selon l'une quelconque des revendications précédentes,
**caractérisé**
**en ce que** le réservoir de stockage (2) présente une configuration par exemple en entonnoir ou en cylindre et **en ce que** l'axe (A) est incliné par rapport à la verticale (15) ou est placé à la verticale.

15. Dispositif, destiné à réaliser le procédé selon l'une quelconque des revendications précédentes,
**caractérisé**
**en ce que** le dispositif est adapté pour la mise en œuvre de matières thermoplastiques, de masses de polyester humide, de silicones solides, destinés à des unités de moulage par injection, ainsi qu'à des unités d'extrusion.

16. Machine de moulage par injection / unité d'extrusion comportant un dispositif présentant les caractéristiques selon les revendications 12 à 15.
